# EUROPÄISCHE PATENTSCHRIFT

(11) **EP 2 969 595 B1**
(45) Veröffentlichungstag und Bekanntmachung des Hinweises auf die Patenterteilung: **17.10.2018**
(21) Anmeldenummer: 14700279.4
(22) Anmeldetag: 10.01.2014
(51) Int. Cl.: B60C 9/20

(54) **FAHRZEUGLUFTREIFEN**
VEHICLE PNEUMATIC TIRE
PNEUMATIQUE DE VÉHICULE

(30) Priorität: 12.03.2013 DE 102013102429
(43) Veröffentlichungstag der Anmeldung: 20.01.2016
(73) Patentinhaber: Continental Reifen Deutschland GmbH, 30165 Hannover (DE)
(72) Erfinder: GEHLAUF, Matthias, 31319 Sehnde (DE); GÖRGÜN, Alexis, Chiyoda-ku, Tokyo (JP); FRIES, Volkmar, 30900 Wedemark (DE)
(74) Vertreter: Finger, Karsten
(86) Internationale Anmeldenummer: PCT/EP2014/050341
(87) Internationale Veröffentlichungsnummer: WO 2014/139689

(56) Entgegenhaltungen:
- EP-A1- 0 655 352
- EP-A2- 0 143 651
- EP-A2- 0 342 644
- WO-A1-2012/164442
- "POLYGONALLY PREFORMED STEEL ELEMENTS", RESEARCH DISCLOSURE, MASON PUBLICATIONS, HAMPSHIRE, GB, Nr. 363, 1. Juli 1994 (1994-07-01), Seiten 359-365, XP000461309, ISSN: 0374-4353

## Beschreibung

Die Erfindung betrifft einen Fahrzeugluftreifen in Radialbauart, insbesondere einen Nutzfahrzeugreifen, mit einem Gürtelpaket aus wenigstens drei Gürtellagen, von denen zwei Gürtellagen als sogenannte Arbeitslagen ausgestaltet sind und von denen die radial äußerste Gürtellage als sogenannte Abdecklage ausgestaltet ist, wobei jede dieser Gürtellagen aus in Elastomer eingebetteten Festigkeitsträgern aus Stahlkord besteht und wobei die Stahlkorde jeder Gürtellage jeweils parallel zueinander und beabstandet voneinander angeordnet sind.

Die EP 0 143 651 A2 offenbart einen pneumatischen Radialreifen, insbesondere einen Nutzfahrzeugreifen, mit einem Gürtelpaket aus wenigstens vier Lagen, nämlich zwei Arbeitslagen und einer radial außen in Bezug auf die Arbeitslagen angeordneten Schutzlage, wobei jede Gürtellage als Festigkeitsträger Stahlkorde enthält, die in jeder Gürtellage jeweils parallel zueinander und beabstandet voneinander angeordnet sind, wobei die Stahlkorde der Schutzlage die Konstruktion dreimal Filamentdurchmesser aufweisen.

Die WO 2012/164442 A1 offenbart einen Luftreifen für Schwerlastfahrzeugräder, umfassend eine Karkasse, einen in radialer Richtung außen bezüglich der Karkasse aufgebrachten Gürtel, und einen Laufstreifen, wobei der Gürtel zumindest eine Verstärkungsschicht umfasst, welche eine Vielzahl von Korden enthält, welche so angeordnet sind, dass sie im Wesentlichen entlang der Umfangsrichtung verstärken, wobei der Gürtel ferner eine erste Hauptgürtellage und eine zweite Hauptgürtellage umfasst, wobei die erste Hauptgürtellage in einem ersten Winkel um eine erste Mehrzahl von Metall-Korden geneigt ist und die zweite Hauptgürtelschicht um eine zweite Vielzahl von Metall-Korden in einem zweiten Winkel geneigt ist, wobei die Metall-Korde der ersten und zweiten Vielzahl von Metall-Korden eine Vielzahl von Filamenten umfassen, die einen Durchmesser von nicht mehr als 0,30 mm und einen Durchmesser nicht größer als 1,30 mm aufweisen.

Nutzfahrzeugreifen mit einem Gürtel, welcher zwei Arbeitslagen und eine Abdecklage aufweist, sind dem Fachmann bekannt. Üblicherweise weist der Gürtel von Nutzfahrzeugreifen vier Lagen auf, welche aus in Gummimischungen eingebetteten Stahlkorden bestehen. Die radial innerste Lage wird bei einem 4-Lagen-Gürtel als "1.Gürtellage" oder nach ihrer Funktion als "Sperrlage" bezeichnet. Radial außen auf dieser sind die 2. Gürtellage und die 3. Gürtellage in Funktion von sogenannten "Arbeitslagen" angeordnet. Die radial äußere Arbeitslage wird von der 4. Gürtellage, der sogenannten "Abdecklage" oder "Schutzlage", abgedeckt.

Die Stahlkorde der 1.Gürtellage weisen in der Regel einen Winkel > 45° in Bezug auf die Umfangsrichtung auf. Die 1. Gürtellage wird aufgrund ihrer Funktion: Sperrung der Beweglichkeit der Arbeitslagen in Umfangsrichtung, als sogenannte "Sperrlage" bezeichnet. Die Stahlkorde der beiden Arbeitslagen weisen typischerweise einen gleichen Winkel zwischen 15° und 30° in Bezug auf die Reifenumfangsrichtung auf, wobei die Stahlkorde der einen Arbeitslage gegenläufig zu den Stahlkorden der anderen Arbeitslage in Bezug auf die Reifenumfangsrichtung geneigt sind. So sind die Stahlkorde der einen Arbeitslage kreuzend zu den Stahlkorden der anderen Arbeitslage angeordnet. Die Arbeitslagen übernehmen hohe Scher- und Zugkräfte, tragen die Hauptlast im Gürtel und sind daher für die Gürtelhaltbarkeit von besonderer Bedeutung.

Die 4. Gürtellage hat die Funktion einer Schutzlage für die beiden darunter liegenden Arbeitslagen, indem sie eine Barriere für Steine oder andere Gegenstände darstellt, die durch das Laufstreifenpaket dringen könnten. Ohne die Schutzlage würden die Korde der Arbeitslagen durch durchdringende Steine verletzt werden und verstärkt der Korrosion ausgesetzt sein, was am Ende die Traglast, die Haltbarkeit und die Runderneuerungsfähigkeit des Reifens reduzieren würde.

Es ist zum Beispiel bekannt, für die Schutzlage Stahlkorde der Konstruktion 3x0,20 + 6x0,35 zu verwenden. Dieser Stahlkord weist einen Kernstrang aus 3 miteinander verdrehten Stahlfilamenten des Durchmessers von 0,20 mm auf, welche von 6 Filamenten des Durchmessers von 0,35 mm umgeben sind.

Hierdurch ergibt sich ein Korddurchmesser von etwa 1,14 mm und als gummierte Lage eine Dicke von etwa 1,65 mm. Diese Korde sind in einer Dichte von 34 bis 60 ends per decimeter (EPDM) in der Schutzlage angeordnet.

Man ist immer bestrebt, den Fahrzeugluftreifen hinsichtlich seiner Haltbarkeit zu verbessern und, wenn zusätzlich möglich, dessen Gestehungskosten zu senken.

Der Erfindung liegt demnach die Aufgabe zugrunde, einen Nutzfahrzeugreifen der eingangs genannten Art mit einem wenigstens dreilagigen Gürtelpaket derart auszuführen, dass dessen Haltbarkeit verbessert ist und zusätzlich die Gestehungskosten gesenkt sind.

Gelöst wird die Aufgabe erfindungsgemäß dadurch, dass die Stahlkorde in der Schutzlage einen Filamentdurchmesser im Bereich von 0,42 bis 0,45 mm aufweisen und in einer Stahlkord-Dichte von 50 bis 80 ends per decimeter (EPDM) in dieser Schutzlage angeordnet sind.

Es ist Nutzfahrzeugreifen mit einem wenigstens dreilagigen Gürtel geschaffen, dessen Schutzlage hinsichtlich ihrer Funktion "Schutz" der unter ihr angeordneten Lagen bezüglich eindringender Steine oder anderer Gegenstände durch "Abfangen" dieser Steine oder anderer Gegenstände, als auch hinsichtlich der Gestehungskosten verbessert ist.

Die Festigkeitsträgerkonstruktion 3 x FD, wobei FD zwischen 0,36 mm - 0,45 mm liegt, beschreibt einen Festigkeitsträger, der aus 3 Filamenten besteht, die miteinander verdreht sind. Jedes Filament hat hierbei den gleichen Durchmesser, der in dem Bereich von 0,36 mm bis 0,45 mm liegt. Jedes Filament weist einen runden Querschnitt auf.

In der Schutzlage des erfindungsgemäßen Reifens ist in etwa die gleiche Menge an Stahlkord wie in der Schutzlage eines Reifens des Standes der Technik angeordnet. Jedoch ist die Stahlmenge anders verteilt: jeder Kord dieser Schutzlage des erfindungsgemäßen Reifens weist aufgrund seines geringeren Korddurchmessers eine geringere Stahlmenge auf, während jedoch die Korddichte erhöht ist.
Durch die höhere Korddichte in der Schutzlage und die Kordkonstruktion mit großen Filamentdurchmessern ist die Schutzlage hinsichtlich ihrer Schutzfunktion verbessert. Der große Durchmesser der Filamente erhöht die Schnittbeständigkeit der Schutzlage. Die höhere Korddichte bildet ein wirksameres "Gitter" gegen eindringende Gegenstände. Gleichzeitig erhöht die Kompaktheit der Kordkonstruktion 3 x FD dessen Stabilität gegen ein Verschieben einzelner Kordbestandteile. Zudem hat der Kord einen geringeren Durchmesser als der Kord des Standes der Technik, so dass bei einer höheren Dichte an Korden in der Schutzlage zudem an Elastomermaterial, welches die Korde einbettet, eingespart ist.

Für Nutzfahrzeugreifen mit erhöhten Anforderungen an die Schutzlage aufgrund von Einsätzen auf steinigem oder unebenem Untergrund ist eine Ausführung der Schutzlage 3 x FD mit FD im Bereich von 0,42 bis 0,45 mm und einer Stahlkord-Dichte von 50 bis 80 pro Dezimeter (EPDM) vorteilhaft, da damit die benötigte Schutzwirkung für diese Reifenkategorie erreicht wird.

Zweckmäßig ist es, wenn die Stahlkorde der Schutzlage aus Stahl der Festigkeitsklasse HT oder höher bestehen, wodurch eine möglichst hohe Festigkeit pro Kordvolumen erreicht ist.

Die folgende Tabelle zeigt Kordkonstruktionen, die in der Abdecklage eines erfindungsgemäßen Fahrzeugluftreifens eingesetzt werden (Zeilen 2a - 4b) im Vergleich zu Korden des Standes der Technik (Zeilen 1a, 1b).

| | Kordkonstruktion | Außendurchmesser des Kordes (in mm) | EPDM | Kord zu Kord-Abstand (in mm) | Spezifisches Kordvolumen (in %) bezogen auf 1a |
|---|---|---|---|---|---|
| 1a | 3x0,20+6x0,35 | 1,13 | 60 | 0,54 | 100 |
| 1b | 3x0,20+6x0,35 | 1,13 | 34 | 1,81 | 57 |
| 2a | 3x0,40 | 0,92 | 78,5 | 0,35 | 74 |
| 2b | 3x0,40 | 0,92 | 65 | 0,61 | 61 |
| 3a | 3x0,42 | 0,97 | 76 | 0,35 | 78 |
| 3b | 3x0,42 | 0,97 | 60 | 0,70 | 62 |
| 4a | 3x0,45 | 1,04 | 72 | 0,35 | 85 |
| 4b | 3x0,45 | 1,04 | 52 | 0,88 | 62 |

Zu jeder Kordkonstruktion ist der Außendurchmesser dieses Kordes, dessen Anordnungsdichte in der Abdecklage, der sich hieraus ergebende Kord zu Kord-Abstand sowie das spezifische Kordvolumen, bezogen auf den Referenzkord der Zeile 1a, angegeben.

Durch einen geringeren Korddurchmesser und somit einer geringeren Lagendicke sind geringere Materialkosten der Abdecklage erreicht. Gleichzeitig ist eine Kord zu Kordbeabstandung von 0,35 mm bis 0,9 mm_ vorteilhaft. Eine noch dichtere Abdeckung - höhere EPDM-Zahl - würde zwar eine weiterhin verbesserte Schutzwirkung erzeugen, jedoch verbliebe zu wenig Gummi zwischen den Korden, welches nachteilig zu einer hohen Dehnung bei gegebener äußeren Verformung führen würde. Ein gleichzeitig größerer Filamentdurchmesser erzeugt eine bessere Schnittbeständigkeit und somit eine bessere Schutzwirkung.

Weitere Merkmale, Vorteile und Einzelheiten der Erfindung werden nun anhand der Zeichnungen, die schematisch ein Ausführungsbeispiel darstellen, näher beschrieben. Dabei zeigen die
Fig.1 einen Teilquerschnitt durch die eine Hälfte eine Fahrzeugluftreifens im Bereich des Gürtels und des Laufstreifens;
Fig. 2 einen Querschnitt durch einen Stahlkord der Schutzlage des Reifens der Fig. 1;
Fig. 3 eine dreidimensionale Ansicht des Stahlkordes der Fig. 2.

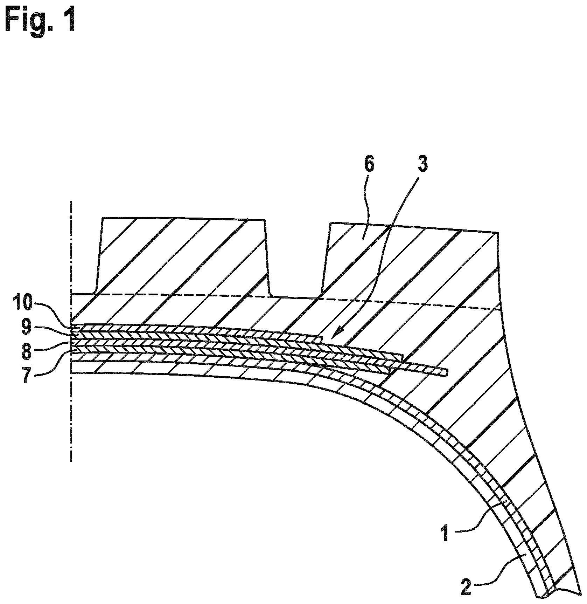

Fig. 1 zeigt einen Querschnitt durch den Laufstreifen und den Gürtelbereich eines Fahrzeugluftreifens für Lastkraftwagen in einer üblichen Standardkonstruktion mit einer Karkasse 1 mit Stahlkorden als Festigkeitsträgern, einer luftdichten Innenschicht 2, einem mehrlagigen Gürtelpaket 3 und einem profilierten Laufstreifen 6.

Das Gürtelpaket 3 weist vier Gürtellagen 7, 8, 9 und 10 auf, wobei die vierte, radial äußerste Gürtellage die geringste Breite von allen Lagen aufweist und die sogenannte Schutzlage 10 bildet. Die erste Gürtellage ist die sogenannte Sperrlage 7, die zweite Gürtellage und die dritte Gürtellage sind die sogenannten Arbeitslagen 8, 9. Die breiteste Gürtellage ist die zweite Gürtellage 8, welche demnach die erste Gürtellage 7 komplett überdeckt. Die dritte Gürtellage 9 ist etwas breiter als oder gleich breit wie die erste Gürtellage 7. Die vierte Gürtellage 10 kann ferner gleich breit wie die dritte Gürtellage 9 ausgeführt sein. Sämtliche Gürtellagen 7, 8, 9, 10 bestehen aus in eine Gummimischung, der Gürtelgummierung, eingebetteten Festigkeitsträgern aus Stahlkord, wobei die Stahlkorde parallel zueinander und beabstandet voneinander angeordnet sind.

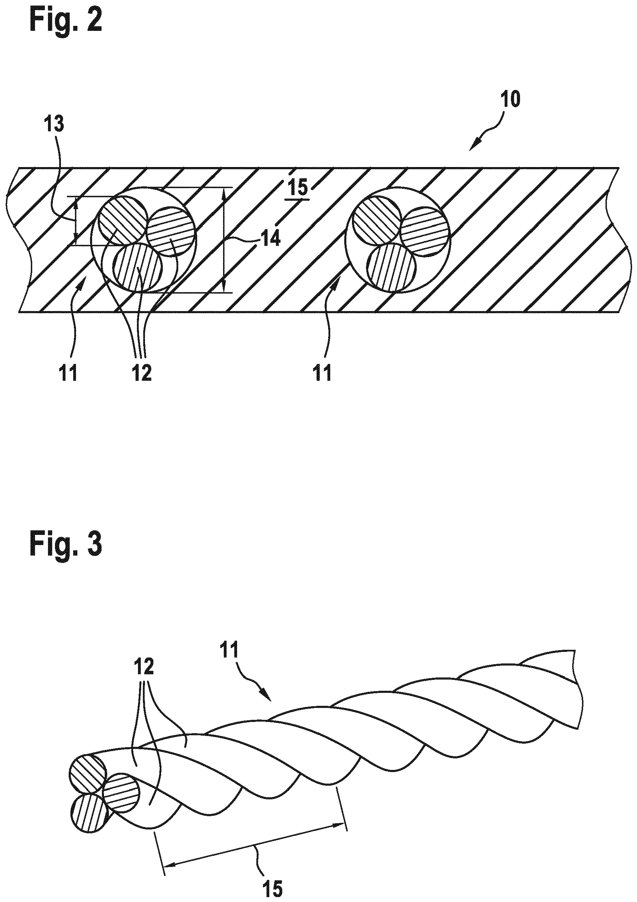

Die Fig. 2 zeigt einen Querschnitt durch die Schutzlage 10 des Reifens der Fig. 1. Die Schutzlage 10 weist Stahlkorde 11 der Festigkeitsklasse HT auf, welche in eine Gummimischung 15 eingebettet sind. Die Stahlkorde 11 sind parallel zueinander und beabstandet voneinander in dieser Schutzlage 10 angeordnet. Die Stahlkorde 11 weisen die Konstruktion 3 x Filamentdurchmesser (FD) auf, wobei der Filamentdurchmesser 13 (FD) 0,36 mm - 0,45mm beträgt. Die Stahlkorde sind in einer Dichte von 60 - 110 ends per decimeter (EPDM) in der Schutzlage 10 angeordnet.

Die Fig. 3 zeigt eine dreidimensionale Ansicht des Stahlkordes der Fig. 2 der Konstruktion 3 x FD 13.

### Bezugszeichenliste

- 1: Karkasse
- 2: Innenschicht
- 3: Gürtelpaket
- 6: Laufstreifen
- 7: Sperrlage (1. Gürtellage)
- 8: Arbeitslage (2. Gürtellage)
- 9: Arbeitslage (3. Gürtellage)
- 10: Schutzlage (4. Gürtellage)
- 11: Stahlkord
- 12: Filament
- 13: Filamentdurchmesser
- 14: Korddurchmesser
- 15: Schlaglänge

## Patentansprüche

1. Fahrzeugluftreifen in Radialbauart, insbesondere einen Nutzfahrzeugreifen, mit einem Gürtelpaket (3) aus wenigstens drei Lagen (8, 9, 10), nämlich zwei Arbeitslagen (8, 9) und einer radial außen in Bezug auf die Arbeitslagen (8, 9) angeordneten Schutzlage (10), wobei jede Gürtellage (8, 9, 10) als Festigkeitsträger Stahlkorde (11) enthält, die in jeder Gürtellage (8, 9, 10) jeweils parallel zueinander und beabstandet voneinander angeordnet sind, wobei die Stahlkorde (11) der Schutzlage (10) die Konstruktion 3 x Filamentdurchmesser (13) aufweisen, **dadurch gekennzeichnet, dass** die Stahlkorde (11) in der Schutzlage (10) einen Filamentdurchmesser im Bereich von 0,42 bis 0,45 mm aufweisen und in einer Stahlkord-Dichte von 50 bis 80 ends per decimeter (EPDM) in dieser Schutzlage (10) angeordnet sind.

2. Fahrzeugluftreifen nach Patentanspruch 1, **dadurch gekennzeichnet, dass** die Stahlkorde (11) der Schutzlage (10) aus Stahl der Festigkeitsklasse HT oder höher bestehen.

## Claims

1. Pneumatic vehicle tyre of a radial construction, in particular a tyre for a commercial vehicle, having a belt assembly (3) made up of at least three plies (8, 9, 10), specifically two working plies (8, 9) and a protective ply (10) arranged radially on the outside in relation to the working plies (8, 9), wherein each belt ply (8, 9, 10) contains steel cords (11) as reinforcing elements which are respectively arranged in each belt ply (8, 9, 10) parallel to one another and spaced apart from one another, the steel cords (11) of the protective ply (10) having the construction 3 × filament diameter (13), **characterized in that** the steel cords (11) in the protective ply (10) have a filament diameter in the range from 0.42 to 0.45 mm and are arranged in this protective ply (10) in a steel cord density of 50 to 80 ends per decimetre (EPDM).

2. Pneumatic vehicle tyre according to Patent claim 1, **characterized in that** the steel cords (11) of the protective ply (10) consist of steel of the strength class HT or higher.

## Revendications

1. Pneumatique de véhicule de construction radiale, en particulier pneumatique de véhicule utilitaire ; comprenant un ensemble de ceinture (3) constitué d'au moins trois couches (8, 9, 10), à savoir deux couches de travail (8, 9) et une couche de protection (10) disposée radialement à l'extérieur par rapport aux couches de travail (8, 9), chaque couche de ceinture (8, 9, 10) contenant en tant que renforts des câbles d'acier (11) qui sont disposés à chaque fois parallèlement les uns aux autres et à distance les uns des autres dans chaque couche de ceinture (8, 9, 10), les câbles d'acier (11) de la couche de protection (10) présentant la construction 3 x diamètre des filaments (13), **caractérisé en ce que** les câbles d'acier (11) dans la couche de protection (10) présentent un diamètre de filaments compris entre 0,42 et 0,45 mm et sont disposés avec une densité des câbles d'acier de 50 à 80 extrémités par dm (EPDM) dans cette couche de protection (10).

2. Pneumatique de véhicule selon la revendication 1, **caractérisé en ce que** les câbles d'acier (11) de la couche de protection (10) se composent d'acier de la classe de résistance élevée High Tensile (HT) ou supérieure.
